# EUROPEAN PATENT APPLICATION

(11) **EP 1 536 330 A2**
(43) Date of publication of application: **01.06.2005**
(21) Application number: 04255112.7
(22) Date of filing: 25.08.2004
(51) Int. Cl.: G06F 9/44

(54) **Management apparatus, method and program for managing use of software**

(30) Priority: 28.08.2003 JP 2003304680
(71) Applicant: CANON KABUSHIKI KAISHA, Ohta-ku, Tokyo (JP)
(72) Inventor: Tanaka, Mitsuharu Canon Kabushiki Kaisha, Ohta-ku Tokyo (JP); Inose, Tsutomu Canon Kabushiki Kaisha, Ohta-ku Tokyo (JP); Naito, Kikuo Canon Kabushiki Kaisha, Ohta-ku Tokyo (JP)
(74) Representative: Beresford, Keith Denis Lewis

(57) **Abstract**

A management apparatus for managing the use of software receives a request and transmits first screen data for displaying a first screen and second screen data for displaying a second screen to the request originator. The second screen is constructed with characters of a language that corresponds to the data inputted in the first screen. The data inputted in the first screen corresponds to a software seller. The second screen is constructed with characters of a language used by the seller which corresponds to the data inputted in the first screen.

## Description

### FIELD OF THE INVENTION

The present invention relates to a management apparatus, method and program for managing the use of software.

### BACKGROUND OF THE INVENTION

To designate a language and a region on a data processing apparatus, a method of determining a language and a format by a user is conventionally known (e.g., U.S.P. 6,339,755).

However, in the above-described conventional technique, the user must select and designate a language and regional features. For this reason, it is necessary for the user to have knowledge of languages and regional features. To put it the other way around, the conventional technique is not user-friendly for a user who does not have knowledge of languages and regional features.

### SUMMARY OF THE INVENTION

The present invention has been proposed to solve the above-described problem, and has as its object to provide a technique of supplying a screen expressed in an appropriate language without requiring a user to perform language selection.

The present invention is purposed to provide a technique of expressing a screen, which is subsequent to the license access number input screen, in an appropriate language.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

The accompanying drawings, which are incorporated in and constitute a part of the specification, illustrate embodiments of the invention and, together with the description, serve to explain the principles of the invention.
Fig. 1 is a structural diagram of a license issuance apparatus according to an embodiment of the present invention;
Fig. 2 is a block diagram of the license issuance apparatus according to the embodiment of the present invention;
Fig. 3 is a license access number input screen according to the embodiment of the present invention;
Fig. 4 is a device serial number input screen according to the embodiment of the present invention;
Fig. 5 is a customer data input screen according to the embodiment of the present invention;
Fig. 6 is a license data acquisition screen according to the embodiment of the present invention;
Fig. 7 is an explanatory view of a software management database according to the embodiment of the present invention;
Fig. 8 is a flowchart describing a license issuance procedure according to the embodiment of the present invention; and
Fig. 9 is a flowchart describing a language/region determination procedure according to the embodiment of the present invention.

### DETAILED DESCRIPTION OF THE PREFERRED EMBODIMENT

Hereinafter, a preferred embodiment of the present invention is described as an example in detail in accordance with the accompanying drawings. Note that the display screens described in this embodiment are only an exemplification, and are not purposed to limit the scope of the present invention. Note, in this embodiment, an application program means a software development unit developed by a software developer for enabling particular processing on a data processing apparatus. Further, a commercial product means a sales unit in which the application program registered in the system of the present embodiment is defined by specifying the sales main body, distribution channel, license condition and the like. One commercial product includes one or more packages. A package is a unit of purchase. When a user purchases one or more packages, the user installs software included in the package in the user's data processing apparatus to use the software. Furthermore, a browser is a program for accessing a content that exists in a network, e.g., the Internet.

### <Description of Apparatus>

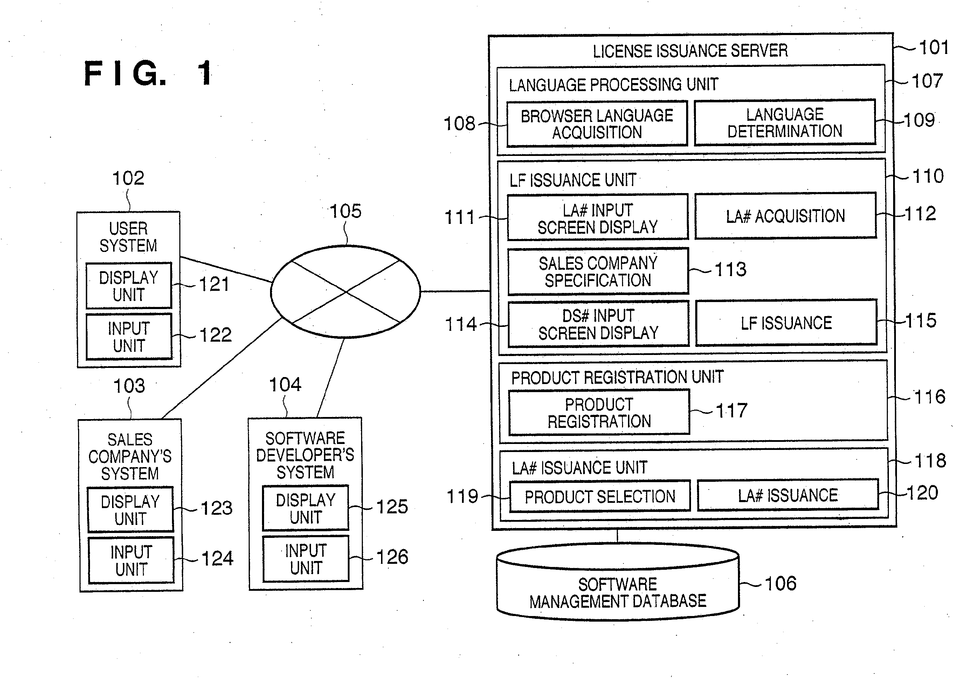

Fig. 1 is a structural diagram of a system including a license issuance server 101 serving as a data processing apparatus according to the preferred embodiment of the present invention. This network system is provided for managing software, and in particular, preventing software fraud. The license issuance server 101 is a management apparatus which manages the use of software. The system switches the language used on a screen display based on a license access number inputted by an end user.

Referring to Fig. 1, numeral 101 denotes a license issuance server 101 serving as a data processing apparatus which governs the overall license data issuance processing. Numeral 102 denotes a user system serving as a data processing apparatus managed by a user. Any data processing apparatus, e.g., a personal computer, a personal digital assistance, a printer, a copy machine and the like, which is capable of connecting to a network and in which software is installable, can be used as the user system 102. Numeral 103 denotes a sales company's system serving as a data processing apparatus managed by a sales company. Numeral 104 denotes a software developer's system serving as a data processing apparatus managed by a software developer. A personal computer or a workstation can serve as the sales company's system 103 or the software developer's system 104.

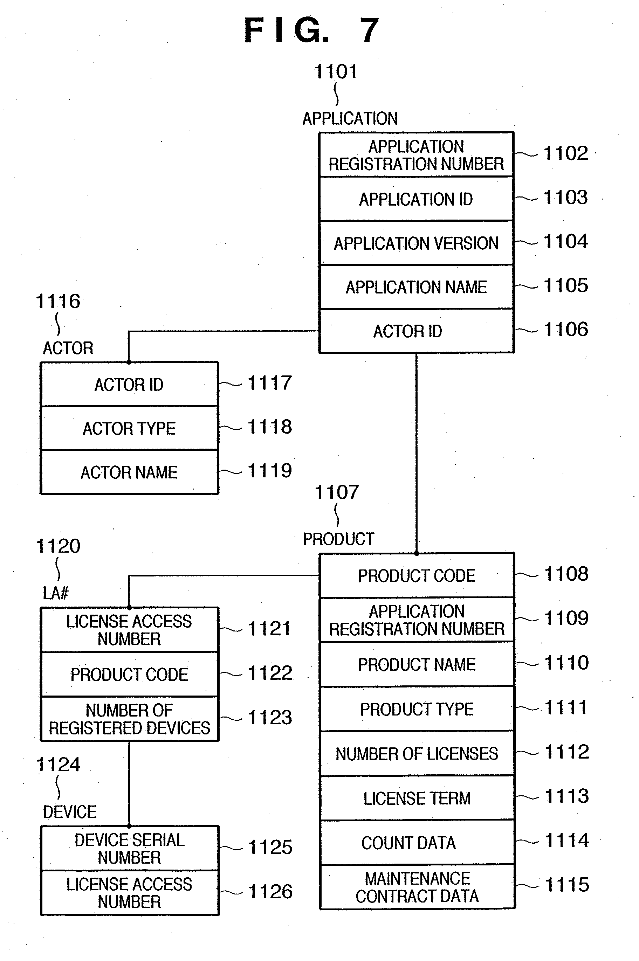

Numeral 105 denotes a network, such as the Internet. The user system 102, sales company's system 103, and software developer's system 104 are connected to the license issuance server 101 through the network 105. Numeral 106 denotes a database, which is connected to the license issuance server 101, and which stores application data, product data including a license file (LF), actor data, license access number (LA#) and device serial number (DS#). The actor data represents information regarding the sales company or software developer. The data stored in the database 106 will be described later with reference to Fig. 7.

Numeral 107 denotes a language processing unit of the license issuance server 101. The language processing unit 107 includes a browser language acquisition module 108 and a language determination module 109. Numeral 110 denotes a license file (LF) issuance unit of the license issuance server 101. The license file issuance unit 110 includes a license access number (LA#) input screen display module 111, a license access number (LA#) acquisition module 112, a sales company specifying module 113, a device serial number (DS#) input screen display module 114, and a license file (LF) issuance module 115. The LF issuance unit 110 also includes a user data input screen display module and a license data acquisition screen display module (not shown). Numeral 116 denotes a product registration unit of the license issuance server 101. The product registration unit 116 includes a product registration module 117. Numeral 118 denotes a license access number issuance unit of the license issuance server 101. The license access number issuance unit 118 includes a product selection module 119 and a license access number issuance module 120.

Numeral 121 denotes a display unit of the user system 102; and 122, an input unit of the user system 102. Numeral 123 denotes a display unit of the sales company's system 103; and 124, an input unit of the sales company's system 103. Numeral 125 denotes a display unit of the software developer's system 104; and 126, an input unit of the software developer's system 104.

In order for a user, who has purchased software managed by the system according to the present embodiment, to install the software to the user system 102 serving as a data processing apparatus, license data issued by the license data issuance server 101 is always necessary. The license data issuance server 101 issues license data to an appropriate access through the network 105. The license data can incorporate identification data which is unique to the data processing apparatus of the software installing destination. In this case, the software can be installed only in the data processing apparatus which has the identification data incorporated in the license data. In other words, in order to install the same software to another apparatus, different license data is necessary. This can prevent unauthorized copying of the software. The license server 101 manages the use of software in the foregoing manner.

The sales company and software developer sell a software package that includes a license access number acquired from the license data issuance server 101. The user, who purchases the software managed by the system according to the present embodiment, directly accesses the license data issuance server 101 and acquires license data in exchange for the license access number.

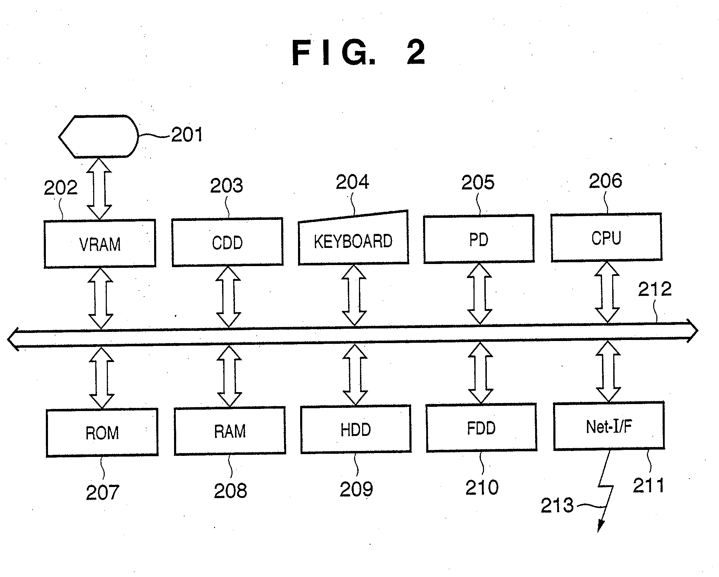

Fig. 2 is a block diagram showing a brief construction of the license issuance server 101.

In Fig. 2, numeral 201 denotes a display device. On the display screen of the display device, for instance, a window, an icon, a message, a menu and other user interface data are displayed. Numeral 202 denotes a VRAM (video random access memory) where an image to be displayed on the display device 201 is rendered. Image data generated in the VRAM 202 is transferred to the display device 201 in accordance with a predetermined specification, and the image is displayed on the display device 201. Numeral 203 denotes a CDD (compact disk drive) which reads or writes various control programs and data from or to a recording medium, e.g., CD-ROM, CD-R or the like. It may be substituted with a DVD drive.

Numeral 204 denotes a keyboard having various keys for character input. Numeral 205 denotes a PD (pointing device) used for designating, e.g., an icon, a menu and other objects displayed on a display screen of the display unit 201. Numeral 206 denotes a CPU (central processing unit) which controls each device connected to the CPU 206 in accordance with a control program stored in the ROM (read-only memory) 207, HDD (hard disk drive) 209, FDD (flexible disk drive) 210, and CDD 203. Numeral 207 denotes ROM storing various control programs and data. Numeral 208 denotes RAM (random access memory) having a work area of the CPU 206, a data saving area at the time of error processing, a control program loading area, and so on.

Numeral 209 denotes a HDD serving as a storage device, which stores various control programs and various data. Numeral 211 denotes a network interface (Net-I/F) which performs communication with other data processing apparatuses, printers and the like through the network 213. Numeral 212 denotes a CPU bus, including an address bus, a data bus, and a control bus. A control program can be supplied to the CPU 206 from the ROM 207, HDD 209, FDD 210, or CDD 203, or from other data processing apparatus through the network 213. The network 213 is connected to the network 105.

The hardware configuration of the license issuance server 101 has been described above with reference to Fig. 2. The user system 102, sales company's system 103, and software developer's system 104 can have the same configuration as that of Fig. 2.

Note that the language processing unit 107, LF issuance unit 110, product registration unit 116, and LA# issuance unit 118 of the license issuance server 101 in Fig. 1 represent the functions which are realized by the CPU 206 in Fig. 2 utilizing respective components of the license issuance server 101. Furthermore, the respective display units 121, 123 and 125 of the user system 102, sales company's system 103 and software developer's system 104 correspond to the display device 201 in Fig. 2. The input units 122, 124 and 126 correspond to the keyboard 204 and PD 205 in Fig. 2.

Next, an operation of the license issuance server 101 according to the present embodiment is described.

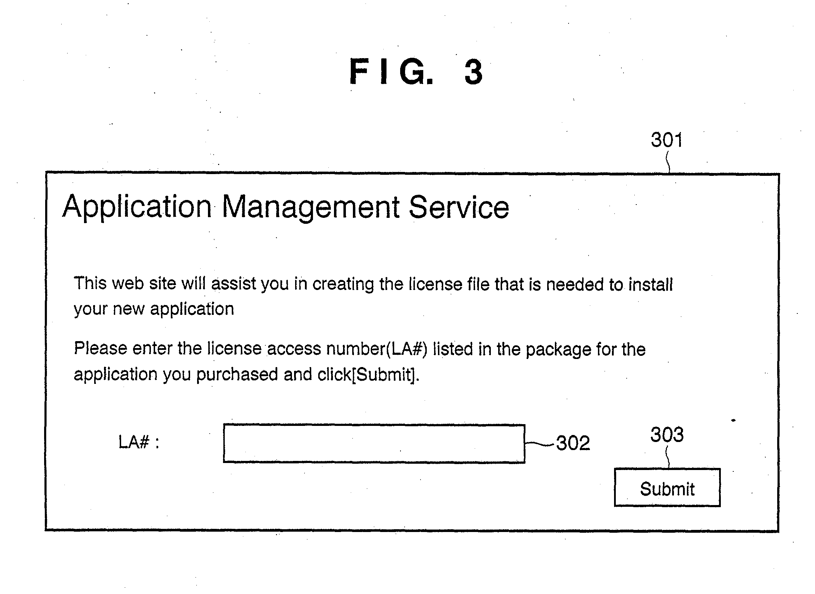

Fig. 3 shows a license access number input screen provided by the license issuance server 101. Upon receiving an access from the user system 102 through the Internet 105, the license issuance server 101 transmits to the user system 102, display data for displaying a license access number input screen in English shown in Fig. 3, or a license access number input screen in another language.

In Fig. 3, numeral 301 denotes a license access number input screen. On this screen, a license access number input box 302 and a submit button 303 are displayed.

To have a license issued, an end user first accesses a URL provided for license issuance. Upon receiving an access from the user, the license issuance server 101 acquires the language setting of the user's browser through the browser language acquisition module 108. A license access number input screen in the language corresponding to the browser's language (English, Japanese or the like) is displayed on the display unit 121 of the user system 102 by the license access number (LA#) input screen display module 111. Herein, the license access number input screen is prepared for, e.g., English, Japanese, Chinese, Korean, German, French, Italian, Spanish, and Portuguese, and the license access number input screen corresponding to the browser's language is displayed. If there is no license access number input screen corresponding to the browser's language, the screen is displayed in a specified language, e.g., English.

Fig. 3 shows the license access number input screen 301 in a case where the browser's language setting is English. The same content would be displayed on a screen of another language.

The end user inputs a license access number, included in the purchased software package, in the license access number input box 302 of the license access number input screen 301, and selects the submit button 303 to start license issuance processing.

When the submit button 303 is selected, the license issuance server 101 acquires the inputted license access number by the license access number (LA#) acquisition module 112, and specifies the sales company corresponding to the license access number, i.e., the sales company which has sold the software package, by the sales company specifying module 113. The correspondence between the license access numbers and sales companies is registered in the software management database 106. The sales company specifying module 113 specifies the sales company by referring to the software management database 106. Next, the license issuance server 101 determines the language and region by the language determination module 109 based on a language determination rule of the specified sales company. The language determination rule is a language determination method which is different for each sales company. For instance, in a case of a sales company in charge of Europe, an access is received from countries such as France, Italy, Germany, Spain and so forth. If the browser language is one of these languages, the display screen adopts that language. Since the region is Europe, the date is expressed as DD/MM/YYYY, and the time notation is expressed in GMT. Since the language determination rule can be changed in accordance with the convenience of the sales company, flexible operation is possible. In other words, a language specified for the sales company that corresponds to the license access number inputted in the license access number input screen is decided as the language for screen display.

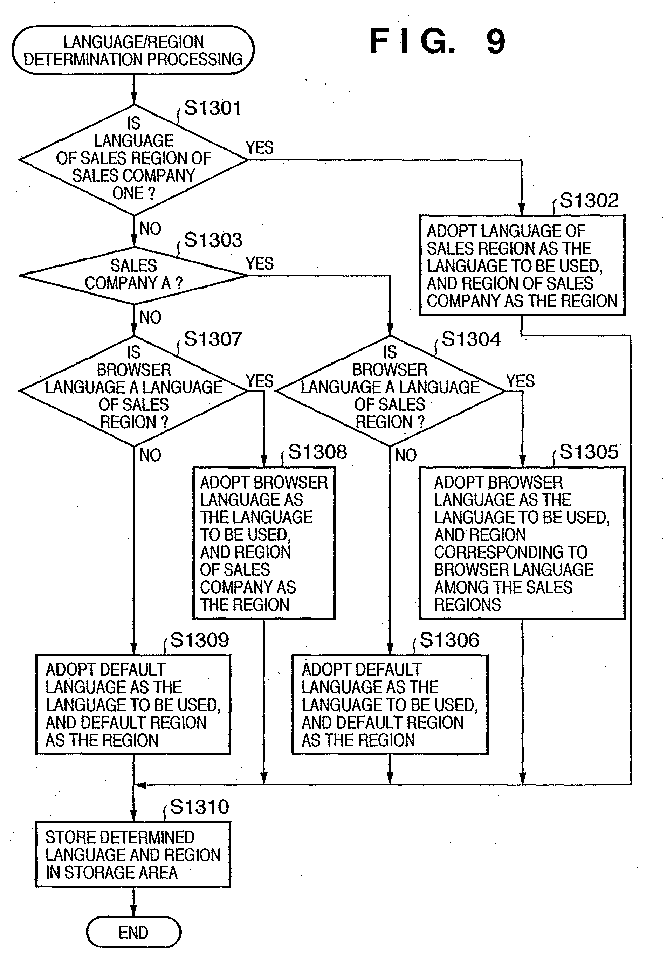

Instead of referring only to the language setting of the browser employed by the user, the sales company is determined based on the license access number inputted by the user, and then the region governed by the sales company and the language are determined. Therefore, the display language can be determined within the parameters of the governing regions and languages. For instance, in a case where a license access number sold by an American sales company is inputted from a French-setting browser, the screen is displayed in English. If a French screen is displayed and data input is performed in French; the American sales company cannot correspond. This rule is described as the processing in the server program. The flowchart of the license issuance processing in Fig. 9 which will be described later shows the language determination rule of a sales company.

Next, the license issuance server 101 transmits, through the device serial number (DS#) input screen display module 114, a device serial number input screen corresponding to the language that is determined based on the license access number. The device serial number input screen is displayed on the display device of the end user.

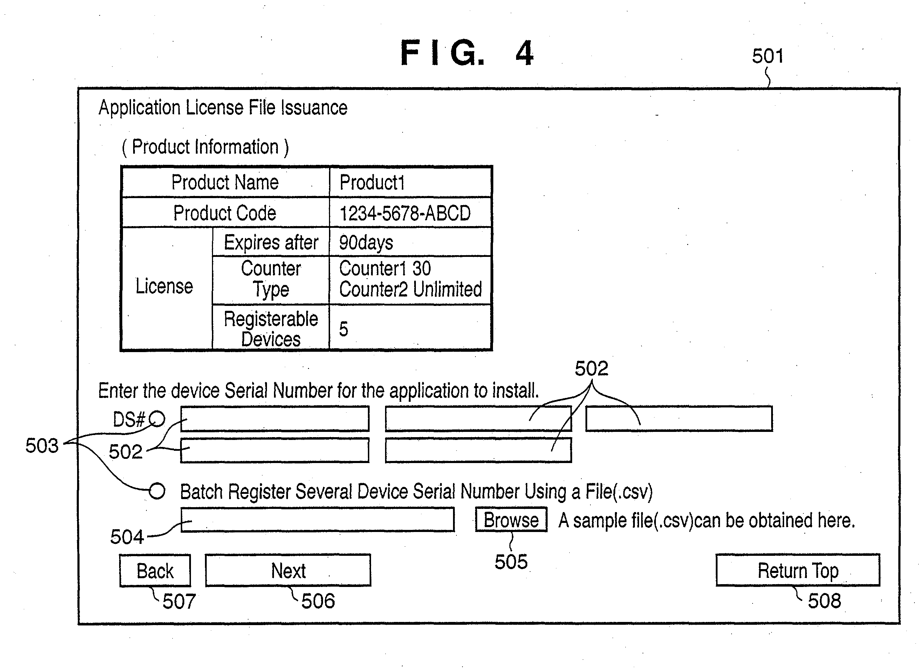

Fig. 4 shows a device serial number (DS#) input screen provided by the license issuance server 101. Fig. 4 shows a device serial number input screen in a case where the language determined based on the license access number is English. If the determined language is Japanese, the same content as that of Fig. 4 in Japanese is displayed on the screen. In other words, the DS# input screen is constructed with characters of the language that corresponds to the license access number inputted in the license access number input screen shown in Fig. 3. The license access number inputted in the license access number input screen in Fig. 3 corresponds to the software seller. The device serial number is data for using the software.

Referring to Fig. 4, numeral 501 denotes a device serial number input screen (in the drawing, it is referred to as "Application License File Issuance"). The device serial number is data for using the software. The device serial number input screen 501 shows, along with the "Product Information", a device serial number input box 502, a device serial number input method selection radio button 503, a device serial number file name input box 504, a device serial number file designation reference (Browse) button 505, a [Next] button 506 for designating license data issuance, a [Back] button 507 for returning to the previous screen, and a [Return Top] button 508 for canceling the license data issuance processing. In Fig. 4, a device serial number is indicated as a "device number" or "DS#" in abbreviated expression.

The number of the device serial number input boxes 502 displayed is whichever smaller: the largest number of device serial number input boxes displayable, or the number obtained by subtracting the number of already-issued licenses of the product from the number of licenses. Fig. 4 shows an example in which the number obtained by subtracting the number of already-issued licenses from the number of licenses is 5.

In this screen, the user confirms that there is no difference between the displayed software data and the software included in the purchased package, and then selects a device serial number designation method by the radio button 503. When the upper radio button is selected, a device serial number (DS#) of the data processing apparatus to which the software is installed is inputted to the device serial number input box 502. When the lower radio button is selected, a device serial number file is inputted in the device serial number file name input box 504 with an absolute path, or the device serial number file designation reference (Browse) button 505 is selected to display an OS standard's file designation dialogue box, and a device serial number file is designated. After a device serial number is designated by one of these methods and the [Next] button 506 is selected, the license issuance server 101 transmits display data for displaying the user data input screen, corresponding to the previously determined language, to the user system 102 through the user data input screen display module (not shown).

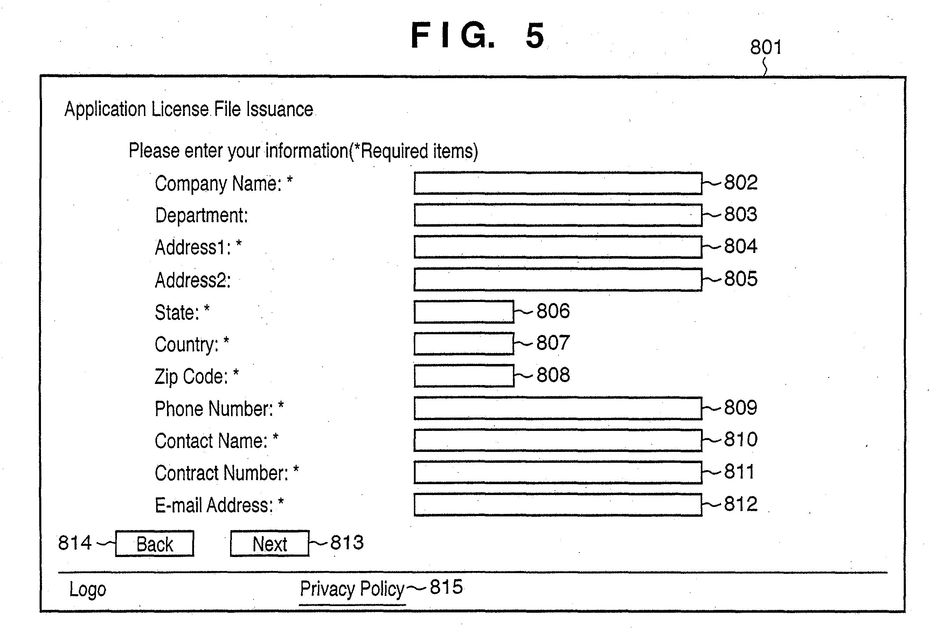

Fig. 5 shows a user data input screen provided by the license issuance server 101. User data is data for using the software.

In a case where a language determined based on the license access number is English and the region is America, the screen shown in Fig. 5 is displayed. In other words, this user data input screen is constructed with characters of the language that corresponds to the license access number inputted in the license access number input screen shown in Fig. 3.

Referring to Fig. 5, numeral 801 denotes a customer data input screen. The screen 801 includes a company name input box 802, a department input box 803, an address 1 input box 804, an address 2 input box 805, a state input box 806, a country input box 807, a zip code input box 808, a telephone number input box 809, a contact person input box 810, a contact telephone number input box 811, an e-mail address input box 812, a [Next] button 813, a [Back] button 814, and a Privacy Policy link 815.

Since the address input items differ for the countries and regions, the license issuance server 101 includes input items corresponding to the decided region, and transfers the customer data input screen in the language that has been determined. For instance, if the determined language is Japanese and the region is Japan, a prefecture selection list which is a Japanese-unique item is displayed. In other words, the customer data input screen 801 includes an address input item based on the sales region of the sales company. As described above, the user data input screen has a format that corresponds to the license access number inputted in the license access number input screen.

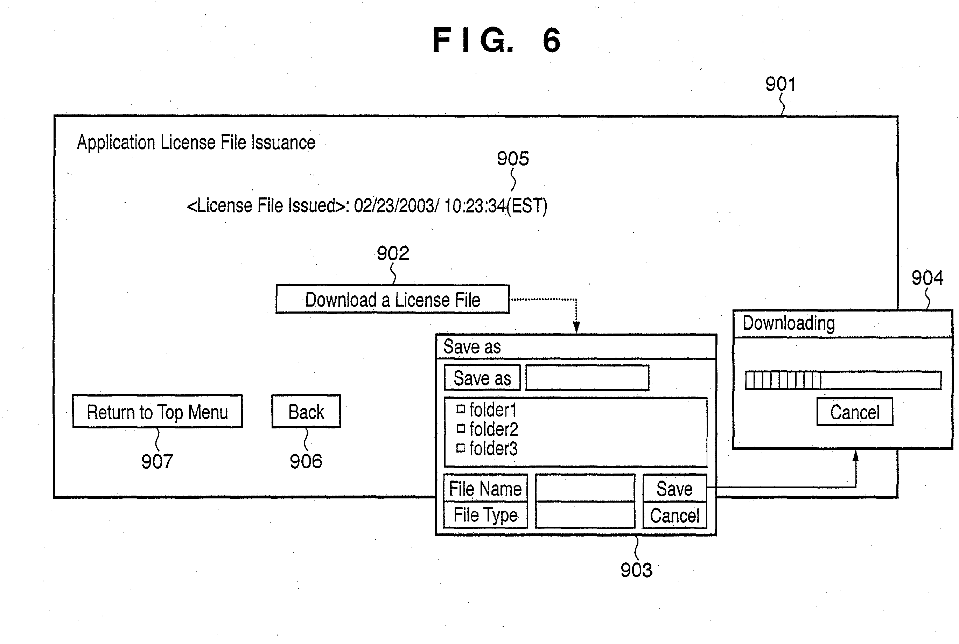

When the end user inputs respective items 802 to 812 and selects the [Next] button 813, the customer data input is confirmed. When the customer data is confirmed, license data that is necessary to introduce (install) the software in the data processing apparatus corresponding to the inputted device serial number is generated and stored in a predetermined location of the license issuance server 101 (e.g., in the RAM 208) by the license file (LF) issuance module 115. Upon completion of the generation of the license data, a license data acquisition screen shown in Fig. 6 is displayed by a license data acquisition screen display module (not shown).

When the end user selects the Privacy Policy link 815, the license issuance server 101 transmits a screen (not shown) of a privacy policy (description regarding handling of personal data) corresponding to the determined language.

Fig. 6 shows a license data acquisition screen provided by the license issuance server 101. The license data acquisition screen is constructed with characters of the language that corresponds to the license access number inputted in the license access number input screen shown in Fig. 3.

In Fig. 6, numeral 901 denotes the license data acquisition screen (in the drawing, it is referred to as "Application License File Issuance"). The screen 901 includes a license data issuance date and time 905 (in the drawing, it is referred to as "License File Issued'), a [Download a License File] button 902 for designating license data acquisition, a [Back] button 906 for returning to the previous screen, and a [Return to Top Menu] button 907 for returning to the top menu.

If the user selects the [Download a License File] button 902 in the screen to acquire the issued license data (file), an OS standard's file designation dialogue box 903 is displayed. When an arbitrary destination for storing the license data (file) and the file name are inputted and storage is designated, an OS standard's download-indication dialogue 904 is displayed, and the license data (file) is downloaded by the license file (LF) issuance module 115.

Fig. 6 shows a license data acquisition screen in a case where the determined language is English and the region is America. Therefore, the date notation of the license data issuance date and time 905 is expressed in the form of MM/DD/YYYY, and the time notation is expressed in the form of hh:mm:ss (EST).

If the determined language is Japanese and the region is Japan, the date notation of the license data issuance date and time is expressed in the form of YYYY/MM/DD and the time notation is expressed in the form of hh:mm:ss (JST). Note that the time displayed on each screen is a local time (in which the time difference and summer time are considered) corresponding to the sales region of the sales company. The license data acquisition screen 901 includes the date item and time item based on the sales region of the sales company. Furthermore, although a description has been given herein on an example of displaying the date notation and time notation in the form corresponding to the determined region, a currency display form such as a currency sign, and a numeric value display form such as a decimal marker, a punctuation, a minus sign and the like may be handled in the similar manner. As described above, the license data acquisition screen 901 has a format corresponding to the license access number inputted in the license access number input screen.

Fig. 7 is a diagram showing data stored in the database 106. Application data, product data including license data, actor data, license access number data, and device number data are stored in the database 106.

Numeral 1101 denotes an application table storing application data. In the table 1101, an application registration number 1102 which uniquely identifies the application program on the system, an application ID 1103, an application version 1104, an application name 1105, and an actor ID 1106 are stored.

Numeral 1107 denotes a product table storing product data including license data. In the table 1107, a product code 1108, an application registration number 1109, a product name 1110, a product type 1111, the number of licenses 1112, a license term 1113, count data 1114, and maintenance contract data 1115 are stored. Data regarding the products registered in the license issuance system is stored in respective fields of the table 1107. Since the application program and the product have a one-many relation, plural products can exist for one application program.

Numeral 1116 denotes an actor table storing actor data. In the table 1116, an actor ID 1117 which uniquely identifies the actor, an actor type 1118 indicative of the type of sales company or software developer, and an actor name 1119 indicative of the name of the sales company or the software developer are stored.

Numeral 1120 denotes a license access number (LA#) table storing license access number data. In the table 1120, a license access number 1121, a product code 1122, and the number of registered devices 1123 are stored. Since the product and the license access number have one-many relation, plural license access numbers can exist for one product.

Numeral 1124 denotes a device table storing device number data. In the table 1124, a device serial number 1125 and a license access number 1126 are stored. Since the license access number and the device have one-many relation, plural devices can exist for one license access number.

To specify a sales company from the license access number inputted in the license access number input screen (Fig. 3), the license access number (LA#) table 1120 is specified based on the inputted license access number. Further, based on the product code 1122 of the LA# table 1120, the product table 1107 can be specified. Based on the application registration number 1109 of the product table 1107, the application table 1101 can be specified. Based on the actor ID 1106 of the application table 1101, the actor table 1116 can be specified. Since the sales company is managed in the Actor table 1116, the obtained actor record indicates the sales company.

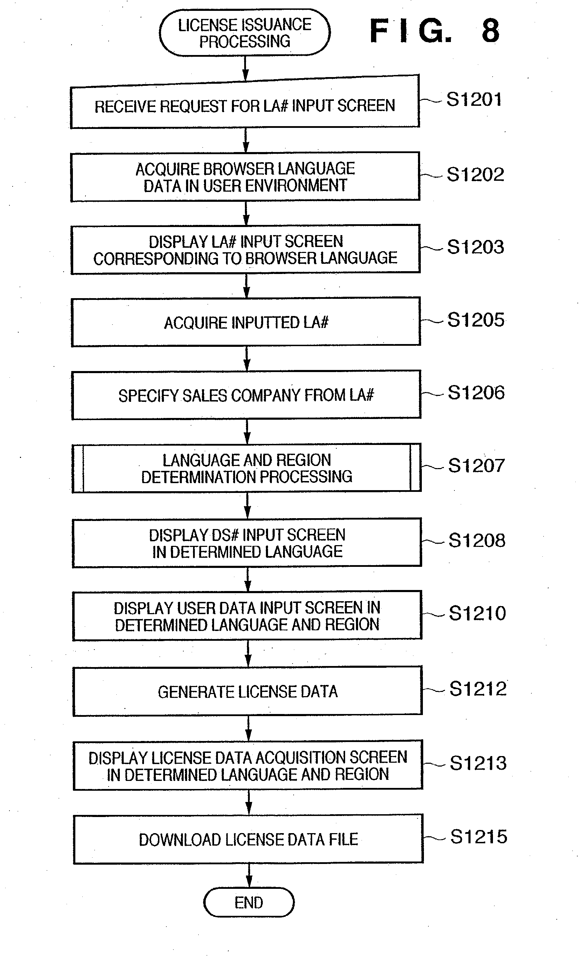

Next, a processing procedure according to the present embodiment is described with reference to Figs. 8 and 9.

Fig. 8 is a flowchart describing a license issuance procedure of the license issuance server 101 according to the present embodiment.

First, an end user inputs on the Web browser of the user system 102, a URL of the license issuance system to request displaying of the license access number input screen. This request is transmitted to the license issuance server 101 as request data. The license issuance server 101 receives the request data in step S1201. The request data includes language data set in the Web browser of the user system 102. In step S1202, the license issuance server 101 acquires from the request data, language data set in the Web browser employed by the end user.

Next, in step S1203, the license issuance server 101 outputs the license access number input screen 301 corresponding to the language set in the browser. In response, the license access number input screen is displayed on the end user's display unit 121. Next, the end user inputs a license access number, included in the purchased software package, in the license access number input box 302 of the license access number input screen, and selects the [Submit] button 303.

The license issuance server 101 acquires the inputted license access number in step S1205, and in step S1206 specifies the sales company (or software developer) which has sold the software package based on the license access number. Next, in the language/region determination processing in step S1207, the license issuance server 101 determines the language and region based on the language/region determination rule of the specified sales company. In step S1208, a device serial number input screen (license data issuance screen) 501 in the determined language is displayed. In other words, the device serial number input screen 501 is constructed with characters of the language corresponding to the license access number inputted in the license access number input screen 301. The license access number inputted in the license access number input screen 301 corresponds to the software seller. The device serial number is data for using the software.

When the end user inputs the device number of the data processing apparatus serving as the installation destination and selects the [Next] button 506, the license issuance server 101 displays in step S1210 the user data input screen 801 corresponding to the language and region determined based on the license access number. In other words, the user data input screen 801 is constructed with characters of the language corresponding to the license access number inputted in the license access number input screen 301. The user data is data for using the software.

Next, when the end user inputs user data and selects the [Next] button 813, the license issuance server 101 generates license data in step S1212 and stores the generated data in a predetermined location of the license issuance server 101 (e.g., RAM 208).

In step S1213, the license data acquisition screen 901, corresponding to the language and region determined based on the license access number, is displayed. In other words, the license data acquisition screen 901 is constructed with characters of the language corresponding to the license access number inputted in the license access number input screen 301. When the end user selects the [Download a License File] button 1002 and designates a storage location in the end user's system (data processing apparatus) 102, the license issuance server 101 downloads the license data file in step S1215. The user system 102 stores the license data file in the designated storage location, and the control ends.

As described above, in step S1203, first screen data for displaying the license access number input screen constructed with characters of the language set in the browser of the request's originator (user system 102) is transmitted, and then in steps S1208, S1210, and S1213, second screen data for displaying a second screen constructed with characters of the language, which is determined in accordance with the software seller based on the license access number inputted in the license access number input screen, is transmitted.

Fig. 9 is a flowchart describing in detail a language/region determination procedure performed in step S1207 in Fig. 8.

Upon specifying the sales company (or software developer) in step S1206 in Fig. 8, this control in Fig. 9 is called. In step S1301, it is determined whether or not the language of the sales region of the sales company specified above is one. If it is one, the language of the sales region is adopted and the region of the sales region is adopted in step S1302, and the control proceeds to step S1310. In other words, the language, determined in accordance with the seller which corresponds to the license access number inputted in the license access number input screen, is determined as the language for screen display. The software management database 106 stores a language of the sale region and a sales region for each sales company, in association with the actor ID.

If the language of the sales region is more than one (if the sales region has plural languages), it is determined in step S1303 whether or not the specified sales company is sales company A. The sales company A is a tentative sales company name for expressing a particular sales company, having a language determination rule different from other sales companies.

In a case where the specified sales company is the sale company A, it is determined in step S1304 whether or not the language set in the browser is one of the languages of the sales region. If it is a language of the sale region, the language set in the browser is adopted and a region corresponding to the browser language is adopted from the sales region in step S1305, and the control proceeds to step S1310. In other words, a language corresponding to the license access number inputted in the license access number input screen, and also corresponding to the language data set in the browser, is determined as the language for screen display. In step S1304 if the browser language is not one of the languages of the sales region, a default language and a default region are adopted in step S1306, and the control proceeds to step S1310. In a case of a sales company in charge of Europe, the default region is, e.g., England, and in a case of a sales company in charge of North America, the default region is America. In this case, the default language is, e.g., English. In other words, a language determined in accordance with the seller corresponding to the license access number inputted in the license access number input screen is determined as the language for screen display.

If the specified sales company is not sales company A in step S1303, it is determined in step S1307 whether or not the language set in the browser is one of the languages of the sales region. If it is the language of the sales region, the language set in the browser is adopted and the region of the sales company is adopted in step S1308, and the control proceeds to step S1310. In other words, a language corresponding to the license access number inputted in the license access number input screen, and also corresponding to the language data set in the browser, is determined as the language for screen display. In step S1307 if the browser language is not one of the languages of the sales region, a default language and a default region are adopted in step S1309, and the control proceeds to step S1310. In other words, the language determined in accordance with the seller corresponding to the license access number inputted in the license access number input screen is determined as the language for screen display.

In step S1310, the determined language and region are stored in a storage area. Then, the license issuance server 101 generates a screen corresponding to the language and region stored in the storage area, and outputs the generated screen data. Note that the determined language and region may be stored in a storage area storing a Web application session and hidden type parameters of the HTML INPUT tag, RAM 208, or HDD 209.

As for a data processing apparatus, any form of data processing apparatus which can install and execute software, e.g., a personal computer, a personal digital assistance including a mobile telephone, an image forming apparatus or the like, may be employed.

Although an embodiment of the present invention has been provided above, the present invention is not limited to the above embodiment, and can be modified within the scope of the claims. For instance, the present invention may be applied to a system constituted by a plurality of devices or to an apparatus comprising a single device.

Note that the present invention includes a case where a software program which realizes functions of the above-described embodiment is supplied directly or remotely to a computer system or apparatus and program codes supplied are read and executed by the system or apparatus. In this case, as long as the function of the program is achieved, the form is not necessarily a program.

Therefore, the program codes installed in the computer for realizing the functions of the present invention by the computer constitute the present invention. In other words, the claims of the present invention include a computer program for realizing the functions of the present invention.

In this case, as long as the function of the program is achieved, any form of program, such as an object code, a program executed by an interpreter, script data supplied to an OS or the like, may be employed.

As a recording medium for supplying the program, for instance, a floppy (registered trademark) disk, a hard disk, an optical disk, a magneto-optical disk, MO, CD-ROM, CD-R, CD-RW, a magnetic tape, a non-volatile type memory card, ROM, DVD (DVD-ROM, DVD-R) and so on are available.

As another program supplying method, the program can be supplied to a client computer by accessing a homepage on the Internet by using a browser of the client computer, and downloading the computer program according to the present invention or a compressed file including an automatic installation function from the homepage to a recording medium, e.g., hard disk or the like. Furthermore, the program codes constituting the program according to the present invention may be divided into plural files, and each of these files may be downloaded from different homepages. In other words, the claims of the present invention include a WWW server which enables a plurality of users to download a program file that causes a computer to realize the functions according to the present invention.

Furthermore, the present invention can also be realized by encrypting the program according to the present invention and storing it in a storage medium, e.g., CD-ROM, to be distributed to a user, then allowing a user who satisfies a predetermined condition to download decryption key data from the homepage through the Internet, and having the user install the program in the computer by executing the encrypted program using the key data.

Furthermore, besides the functions according to the above embodiment are realized by executing the program read by a computer, the present invention includes a case where an OS (operating system) or the like working on the computer performs a part or the entire processes in accordance with designations of the program codes and realizes functions according to the above embodiment.

Furthermore, the present invention also includes a case where, after the program read from the recording medium is written in a function expansion card which is inserted into the computer or in a memory provided in a function expansion unit which is connected to the computer, a CPU or the like contained in the function expansion card or unit performs a part or the entire processes in accordance with designations of the program and realizes functions of the above embodiment.

As many apparently widely different embodiments of the present invention can be made without departing from the spirit and scope thereof, it is to be understood that the invention is not limited to the specific embodiments thereof except as defined in the claims.

## Claims

1. A management apparatus (101) for managing use of software, comprising:
reception means (107, 213) for receiving a request; and
transmission means (109, 111, 113, 114, 115, 213) for transmitting first screen data for displaying a first screen, second screen data for displaying a second screen, and license data of software to a request originator,
**characterized in that** said transmission means transmits the first screen data for displaying the first screen which is constructed with characters of a language set in a browser of the request originator, and the second screen data for displaying the second screen which is constructed with characters of a language determined in accordance with a software seller corresponding to a license access number inputted in the first screen.

2. The apparatus according to claim 1, **characterized in that** the second screen is a screen in which data for using the software is registered.

3. The apparatus according to claim 1, **characterized in that** the second screen is constructed with characters of a language that corresponds to the license access number inputted in the first screen and language data set in the browser of the request originator.

4. The apparatus according to claim 1, **characterized in that** said transmission means transmits the second screen data for displaying the second screen which has a format determined in accordance with the software seller corresponding to the license access number inputted in the first screen.

5. The apparatus according to claim 1, **characterized in that** the second screen includes an address input item corresponding to the software seller.

6. The apparatus according to claim 1, **characterized in that** the second screen includes a date/time item corresponding to the software seller.

7. The apparatus according to claim 1, **characterized in that** the second screen includes a time item corresponding to the software seller.

8. A management method of managing use of software, comprising the steps of:
receiving (S1201) a request; and
transmitting (S1203, S1208, S1210, S1213, S1215) first screen data for displaying a first screen, second screen data for displaying a second screen, and licensee data of software to a request originator,
**characterized in that** in said transmission step, the first screen data for displaying the first screen which is constructed with characters of a language set in a browser of the request originator is transmitted (S1203), and the second screen data for displaying the second screen which is constructed with characters of a language determined in accordance with a software seller corresponding to a license access number inputted in the first screen is transmitted (S1208, S1210, S1213).

9. The method according to claim 8, **characterized in that** the second screen is a screen in which data for using the software is registered.

10. The method according to claim 8, **characterized in that** the second screen is constructed with characters of a language that corresponds to the license access number inputted in the first screen and language data set in the browser of the request originator.

11. The method according to claim 8, **characterized in that** in said transmission step, the second screen data for displaying the second screen which has a format determined in accordance with the software seller corresponding to the license access number inputted in the first screen is transmitted.

12. The method according to claim 9, **characterized in that** the second screen includes an address input item corresponding to the software seller.

13. The method according to claim 9, **characterized in that** the second screen includes a date/time item corresponding to the software seller.

14. The method according to claim 9, **characterized in that** the second screen includes a time item corresponding to the software seller.

15. A computer program product which realizes the method according to any one of claims 8 to 14.

16. A computer readable storage medium having stored thereon computer program code adapted to execute processing according to each of the steps of the method of any one of claims 8 to 14.

17. A transmitted signal carrying computer program code adapted to execute processing according to each of the steps of the method of any one of claims 8 to 14.
